# EUROPEAN PATENT APPLICATION

(11) **EP 2 857 749 A1**
(43) Date of publication of application: **08.04.2015**
(21) Application number: 14176836.6
(22) Date of filing: 11.07.2014
(51) Int. Cl.: F23L 7/00, F23C 9/00

(54) **Method of and system for producing carbon dioxide as by-product of an off gas**

(30) Priority: 02.10.2013 US 201361885567 P
(71) Applicant: Linde Aktiengesellschaft, 80331 München (DE)
(72) Inventor: Thelaus, Jonas, 132 39 Saltsjö-Boo (SE); Ritzén, Ola, 184 94 Åkersberga (SE)
(74) Representative: Hofmann, Andreas

(57) **Abstract**

By eliminating nitrogen (N₂) from the oxidant used, by using oxyfuel technology or synthetic air (mixture of industrial grade oxygen and recycled CO₂ rich fluegas) in place of air, in process operations, the percentage of carbon dioxide (CO₂) in the off gas (OG) from such operations is significantly increased. Because of the lower purity requirements needed by many of the pulp and paper processes, the off gas CO₂ produced according to the present invention can be used without excessive purification.

## Description

### Technical field of the present invention

The present invention relates to the production and recycling of carbon dioxide (CO₂), in particular from operations in pulp and paper production.

### Technological background of the present invention

Many process operations in a plant for pulp and paper production use carbon dioxide (CO₂). Some of these process operations, such as pH control in various processes and filler production (precipitated calcium carbonate or PCC), use large quantities of carbon dioxide (CO₂). While many of these processes require relatively low purity levels of carbon dioxide (CO₂), the cost of carbon dioxide (CO₂) can still be prohibitive.

For an operations process that produces carbon dioxide (CO₂) as a by-product (for example lime kiln or boiler) it is common to use air as the oxidant. The off gas from such an operation typically includes carbon dioxide (CO₂), water and a large percentage of nitrogen (N₂), for example fifty percent or more of nitrogen (N₂).

While it would be possible to purify this off gas, for example by stripping with monoethanolamine (MEA) wash, membrane, pressure swing adsorption (PSA), etc., such processes add to the equipment expense and operating expense of the plant and are therefore undesirable.

### Disclosure of the present invention: object, solution, advantages

Starting from the disadvantages and shortcomings as described above and taking the prior art as discussed into account, an object of the present invention is to overcome the problems that earlier methods and systems have experienced, in particular to provide for a method as well as for a system providing large quantities of carbon dioxide (CO₂) at low cost, in particular for use in pulp and paper production plants.

This object is accomplished by a method comprising the features of claim 1 as well as by a system comprising the features of claim 13. Advantageous embodiments and expedient improvements of the present invention are disclosed in the respective dependent claims.

The present invention basically provides for an on site CO₂ production, in particular in a pulp and paper plant; more particularly, the present invention provides for a method of and a system for producing carbon dioxide (CO₂) as a by-product of an off gas, comprising
- adding carbon dioxide (CO₂) and at least one oxygen rich source as an oxidant to an operations process (unit) along with a fuel, in particular along with oil, natural gas or bio fuel, for example along with pulverized wood chips; and
- capturing and reusing carbon dioxide (CO₂) as the off gas from said operations process (unit).

In particular, the present invention eliminates nitrogen (N₂) from the oxidant used in many process operations. This is accomplished by replacing air as the oxidant source with the oxygen rich source such as oxyfuel technology or synthetic air technology (mixture of industrial grade oxygen and recycled CO₂ enriched fluegas), which can be supplied to the operations process (unit) instead of air.

In this manner the percentage of carbon dioxide (CO₂) in the off gas from such operations can be significantly increased, for example to more than seventy percent, with the remainder being primarily water (H₂O).

Because of the lower purity requirements needed by many of the pulp and paper processes, the off gas carbon dioxide (CO₂) produced according to the present invention can be used without excessive purification; in particular, the off gas can be recycled for reuse in said operations process (unit).

According to an expedient embodiment of the present invention and depending on the requirements of the operations process (unit), the synthetic air mixture can use recycled carbon dioxide (CO₂)
- either before quenching of the off gas and therefore containing water (H₂O)
- or after quenching of the off gas and therefore essentially pure carbon dioxide (CO₂), i. e. the percentage of carbon dioxide (CO₂) in the off gas may be more than ninety percent.

This off gas containing a very high percentage of carbon dioxide (CO₂) may preferably be recycled for reuse in said operations process (unit) or may preferably be supplied for use in a further or secondary operations process (unit), with said further or secondary operations process (unit) producing another off gas.

As to the advantages of the present invention, the off gas produced by using the present invention is essentially free of nitrogen (N₂) and has a much higher carbon dioxide (CO₂) content than the off gas produced when using air as the oxidant.

Therefore the off gas produced by using the present invention can in some cases be used directly as a feed gas to produce synthetic air for the same operations process from which the off gas was produced or to a different operations process.

The present invention finally relates to the use of a method as outlined above and/or of at least one system as outlined above
- in at least one lime kiln of a pulp and paper plant and/or
- in at least one burner of a pulp and paper plant.

### Brief description of the drawings

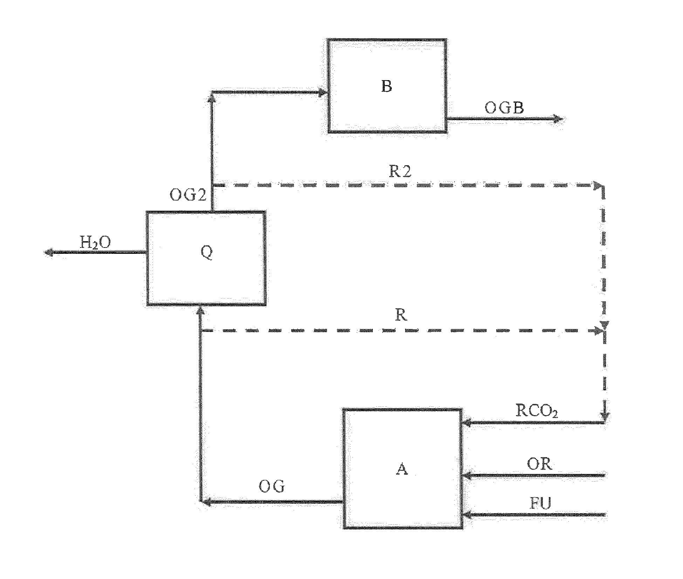

For a more complete understanding of the present embodiment disclosures and as already discussed above, there are several options to embody as well as to improve the teaching of the present invention in an advantageous manner. To this aim, reference may be made to the claims dependent on claim 1 and on claim 13; further improvements, features and advantages of the present invention are explained below in more detail with reference to preferred embodiments by way of non-limiting example and to the appended drawing figure taken in conjunction with the following description of the embodiments, of which:
The drawing figure is a schematic drawing of a method or process according to the present invention, said method or process being implemented in a system according to the present invention, said system being part of a pulp and paper plant.

### Detailed description of the drawings; best way of embodying the present invention

The drawing figure shows an operations process A producing carbon dioxide (CO₂) as a by-product. An oxygen rich source OR, in particular oxygen (O₂), and carbon dioxide (CO₂), in particular recycled carbon dioxide RCO₂, are added to the operations process A as an oxidant, rather than air, along with fuel FU such as oil, natural gas or bio fuel, for example pulverized wood chips, etc.

The off gas OG produced from the operations process A is generally composed of greater than seventy percent carbon dioxide (CO₂), with the remainder being primarily water (H₂O), with very small percentages of oxygen (O₂), typically one percent to five percent, and nitro gen (N₂), from air leakage into the process.

In some cases this off gas OG can simply be recycled (reference numeral R) as is for reuse in the operations process A, again being mixed with the oxygen rich source OR, in particular with the oxygen (O₂), or for a different operations process such as operations process B, with said operations process B producing an off gas OGB.

Alternatively, the off gas OG can be subjected to quenching (reference numeral Q) to remove water (H₂O) and to produce a secondary off gas OG2 of greater than ninety percent carbon dioxide (CO₂). The secondary off gas OG2 can then be supplied for use in the same operations process (= operations process A) or in a different operations process such as operations process B, with said operations process B producing an off gas OGB.

One example of the present invention can be described with respect to operation of a standard lime kiln at a pulp and paper plant. A standard lime kiln operates according the following generalized formula:

CaCO₃ + heat (fuel + oxidant) => CaO + CO₂ + oxidant related components

When using air as the oxidant as known in the prior art and natural gas or methane as the fuel component, the lime kiln off gas in addition to carbon dioxide (CO₂) contains large amounts of water (H₂O) and nitrogen (N₂). A typical formula for such a reaction is shown as follows:

CaCO₃ + x(CH₄ + 2O₂ + 8N₂) => CaO + CO₂ + x(2H₂O+ CO₂ + 8N₂)

When using oxy-fuel according to the present invention, the nitrogen (N₂) in the off gas OG can be virtually eliminated as shown in the following formula:

CaCO₃ + y(CH₄ + 2O₂) => CaO + CO₂ + y(2H₂O + CO₂)

When using synthetic air, for example nitrogen (N₂) is substituted with recycled carbon dioxide RCO₂ or a mixture of recycled carbon dioxide RCO₂ and water (H₂O) if not quenched (reference numeral Q), according to the present invention, again nitrogen (N₂) is virtually eliminated in the off gas OG as shown in the following formula:

CaCO₃ + z(CH₄ + 2O₂ + 8CO₂) => CaO + CO₂ + z(2H₂O + 9CO₂)

For every ton of CaO produced, about 450 kg to 500 kg of carbon dioxide (CO₂) is also produced from the lime kiln. When air is used as the oxidant, as shown above, the off gas OG contains significant quantities of water (H₂O) and nitrogen (N₂).

For example, a typical off gas composition from a lime kiln using air as the oxidant would be about thirty percent carbon dioxide (CO₂), twelve percent water (H₂O) and 55 percent nitrogen (N₂). While this off gas could be purified by a stripping process to remove nitrogen (N₂) and water (H₂O), such processing is expensive.

The present invention provides a more useful opportunity for the recycle and reuse of the off gas OG. In particular, by using industrial grade oxygen, either in oxyfuel technology or synthetic air as the oxidant for the lime kiln, as described above, the off gas OG is essentially free of nitrogen (N₂).

For example, the off gas OG from a typical lime kiln using an oxidant according to the present invention may have a composition of about 72 percent carbon dioxide (CO₂), 26 percent water (H₂O), one percent oxygen (O₂) and one percent nitrogen (N₂).

This off gas OG can be quenched to remove water (H₂O) which results in a gas composition of about 97 percent carbon dioxide (CO₂), one percent oxygen (O₂) and one percent nitrogen (N₂). This composition meets the requirement of greater than ninety percent carbon dioxide (CO₂) for many pulp and paper operation processes and can therefore be used directly without further purification.

A comparison of calculated gas flows from a lime kiln when using air as the oxidant and when using synthetic air as the oxidant according to the present invention is shown in the following table.

| Calculated gas flows from natural gas firedlime kiln | | |
|---|---|---|
| | air fueled | synthetic air fueled (according to the present invention) |
| | | |
| lime production (ton/hr) | 5 | 5 |
| total off gas flow | 10245 | 10245 |
| | | |
| CO₂ from fuel (Nm³/hr) | 802 | 802 |
| CO₂ from lime (Nm³/hr) | 1986 | 1986 |
| CO₂ total (Nm³/hr) | 2788 | 2788 |
| CO₂ total (ton/hr) | 5.47 | 5.47 |
| | | |
| CO₂ raw gas percentage | 12.43 | 42.3 |
| H₂O raw gas percentage | 56.9 | 56.9 |
| O₂ raw gas percentage | 0.72 | 0.72 |
| N₂ raw gas percentage | 29.9 | 0 |
| | | |
| industrial grade oxygen needed (Nm³/hr) | | 1765 |
| | | |
| following quenching | | |
| CO₂ raw gas percentage | 28.3 | 96.1 |
| H₂O raw gas percentage | 1 | 1 |
| O₂ raw gas percentage | 1.6 | 1.6 |
| N₂ raw gas percentage | 67.9 | 0 |

Another example of equipment or processes at a pulp and paper plant which can benefit from the present invention, are operation of boilers. By firing the boilers with oxyfuel or synthetic air according to the present invention, rather than air, the off gas OG produced is high in carbon dioxide (CO₂) content which can be used or treated and then used in a manner similar to that described above.

The present invention provides a number of advantages. The ability to reuse carbon dioxide (CO₂) in the pulp and paper plant has been described above. There is a clear cost savings related to this recycle and reuse of carbon dioxide (CO₂). The reduction of off gas losses that is enabled by the use of oxyfuel technology according to the present invention results in energy savings.

The present invention also provides for reduced nitrogen oxide (NOₓ) and sulfur (S) emissions.

Further, the high percentage, low cost carbon dioxide (CO₂) off gas can be captured and used in other applications or sold to other users. For example, the captured carbon dioxide (CO₂) can be liquefied and then sold.

It is anticipated that other embodiments and variations of the present invention will become readily apparent to the skilled artisan in the light of the foregoing description, and it is intended that such embodiments and variations likewise be included within the scope of the present invention as set out in the appended claims.

### List of reference numerals

- A: operations process or operations process unit, in particular first operations process or first operations process unit
- B: further or secondary operations process or further or secondary operations process unit
- FU: fuel
- OG: off gas from operations process or operations process unit A
- OGB: off gas from further or secondary operations process or further or secondary operations process unit B
- OG2: secondary off gas or off gas from quenching Q
- OR: oxygen rich source
- Q: quenching
- R: recycling, in particular first recycling
- R2: secondary recycling
- RCO₂: recycled carbon dioxide

## Claims

1. A method of producing carbon dioxide (CO₂) as a by-product of an off gas (OG), comprising the steps of
- adding carbon dioxide (CO₂) and at least one oxygen rich source (OR) as an oxidant to an operations process (A) along with a fuel (FU), and
- capturing and reusing the off gas (OG) produced in said operations process (A).

2. The method according to claim 1, wherein said oxygen rich source (OR) comprises industrial grade oxygen.

3. The method according to claim 1 or 2, wherein said oxygen rich source (OR) comprises oxyfuel or synthetic air.

4. The method according to at least one of claims 1 to 3, wherein said fuel (FU) is oil, natural gas or bio fuel.

5. The method according to claim 4, wherein said bio fuel comprises pulverized wood chips.

6. The method according to at least one of claims 1 to 5, wherein said off gas (OG) comprises at least seventy percent carbon dioxide (CO₂) and as remainder primarily water (H₂O).

7. The method according to at least one of claims 1 to 6, further comprising recycling (R) said off gas (OG) as recycled carbon dioxide (RCO₂) for reuse in said operations process (A).

8. The method according to claim 7, wherein a mixture of industrial grade oxygen and RCO₂ enriched fluegas is delivered to said operations process (A).

9. The method according to at least one of claims 1 to 8, further comprising quenching (Q) said off gas (OG) to remove water (H₂O) from said off gas (OG).

10. The method according to claim 9, wherein, by said quenching (Q), a secondary off gas (OG2) of at least ninety percent carbon dioxide (CO₂) is produced.

11. The method according to claim 10, further comprising recycling (R2) said secondary off gas (OG2) as recycled carbon dioxide (RCO₂) for reuse in said operations process (A).

12. The method according to claim 10 or 11, further comprising supplying said secondary off gas (OG2) for use in a further or secondary operations process or further or secondary operations process unit (B), with said further or secondary operations process or further or secondary operations process unit (B) producing an off gas (OGB).

13. A system for producing carbon dioxide (CO₂) as a by-product of an off gas (OG), comprising an operations process unit (A), to which carbon dioxide (CO₂) and at least one oxygen rich source (OR) as an oxidant are added along with fuel (FU), wherein the off gas (OG) produced in said operations process unit (A) is captured and reused.

14. The system according to claim 13, being comprised of at least one lime kiln or of at least one burner.

15. Use of a method according to at least one of claims 1 to 12 and/or of at least one system according to claim 13 or 14 in a pulp and paper plant.
